# DEMANDE DE BREVET EUROPEEN

(11) **EP 2 132 983 A2**
(43) Date de publication de la demande: **16.12.2009**
(21) Numéro de dépôt: 09162503.8
(22) Date de dépôt: 11.06.2009
(51) Int. Cl.: A01K 11/00, G09F 3/00

(54) **Bracelet d'identification d'un ensemble d'éléments**

(30) Priorité: 12.06.2008 CH 8962008
(71) Demandeur: BIWI S.A., 2855 Glovelier (CH)
(72) Inventeur: Bourquard, Pascal, 2854, Bassecourt (CH)
(74) Mandataire: GLN

(57) **Abrégé**

La présente invention concerne un bracelet de marquage destiné à identifier un ensemble de plusieurs éléments. Il comprend un lien (1) muni à ses extrémités de moyens de fixation (2, 3) complémentaires assurant, lors de leur assemblage, la fixation de l'une des extrémités sur l'autre. En outre, il comprend des supports d'information (10, 11, 12) amovibles destinés à être attachés à des éléments de l'ensemble à identifier individuellement. Les supports d'information peuvent être détachables du reste du bracelet de manière sécable et/ou rapportés par emboîtement, et peuvent comprendre des moyens d'attachement (12b) à l'un des éléments à identifier.

## Description

### Domaine technique

La présente invention se rapporte au domaine de l'identification. Elle concerne plus particulièrement un bracelet de marquage destiné à identifier un ensemble de plusieurs éléments, le bracelet comprenant un lien dont les extrémités sont munies de moyens de fixation complémentaires.

### État de la technique

Les dispositifs d'identification par apposition d'un bracelet sont bien connus. Il peut s'agir par exemple d'un bracelet de marquage du gibier ou du bétail. Ceux-ci répondent généralement à des impératifs d'identification et / ou de traçabilité avant et / ou après leur abattage et / ou de gestion des quotas.

L'une de leurs caractéristiques importantes est qu'ils doivent être indémontables une fois mis en place sur l'animal. Si le lien devait être enlevé de l'animal, la seule solution serait ainsi de le détruire, rendant impossible toute mise en place sur un autre animal. Plusieurs brevets ont été accordés pour permettre de répondre à un tel impératif. Les brevets CH662198, CH667773, FR2635437, CH696222 divulguent différentes solutions permettant de réaliser des bracelets indémontables d'une grande efficacité et à moindre coût.

Le lien est généralement utilisé pour faire apparaître des informations. Ces informations peuvent être un numéro d'identification unique ou non, une date ou toute autre information utile.

Lorsqu'une date doit notamment être indiquée sur le lien, il se peut que cette date doive être indiquée après la fabrication du lien, afin par exemple d'indiquer le jour de l'abattage de l'animal. A cet effet, des brevets, tels que CH662198 et CH667773 ont divulgué des solutions à base de dents éliminables. Le lien comporte douze dents, chacune correspondant à 1 mois de l'année et trente-et-une dents, chacune correspondant à un quantième du mois. Ainsi, lorsque l'on veut que le lien indique une date, il suffit de supprimer les dents correspondant au mois et au quantième voulus, par exemple manuellement ou au moyen d'un couteau. De manière complètement analogue, les dents éliminables peuvent représenter des années.

Ces bracelets de marquage, très efficaces, ne permettent toutefois pas de répondre à l'évolution des normes de qualité et des règlementations sanitaires qui imposent une traçabilité toujours plus importante. Dans le domaine de la chasse par exemple, il est essentiel de pouvoir suivre l'animal après abattage. Si un problème sanitaire était constaté sur une des parties de l'animal, il convient de pouvoir retrouver les autres parties du même animal afin, par exemple, de les détruire. Il est ainsi nécessaire d'identifier certaines parties de l'animal après équarrissage.

Un but de la présente invention est de proposer un bracelet permettant une meilleure traçabilité des éléments qu'il est chargé d'identifier.

### Divulgation de l'invention

A cet effet, il est proposé un bracelet de marquage destiné à identifier un ensemble de plusieurs éléments, comportant en outre au moins un support d'information amovible et agencé pour être attaché, après séparation d'avec le bracelet, à l'un des éléments à identifier. Ainsi, ledit support d'information peut être soit déplacé par rapport au reste du bracelet soit retiré du bracelet pour être attaché à l'un des éléments à identifier individuellement.

Selon une variante, ledit bracelet peut de plus comprendre un tronc d'attache auquel est fixé le support d'information de manière sécable du tronc d'attache.

Selon une autre variante, le support d'information et le bracelet peuvent comprendre des moyens d'emboîtement complémentaires. Le support d'information peut en outre comprendre un moyen d'emboîtement complémentaire d'un moyen d'emboîtement d'un autre support d'information.

Selon une autre variante, le support d'information peut être monté pivotant par rapport à l'une des extrémités du bracelet, de manière à pouvoir se superposer au lien.

D'une manière particulièrement avantageuse, le support d'information peut comprendre des moyens d'attachement à l'un des éléments de l'ensemble à identifier.

De préférence, l'un des bords longitudinaux peut comporter des dents éliminables destinées à définir un quantième, un mois ou une année.

L'invention concerne également un bracelet de marquage destiné à identifier un ensemble de plusieurs éléments, comportant au moins un support d'information amovible, ce dernier pouvant comprendre des moyens d'attachement à l'un des éléments de l'ensemble à identifier.

L'invention concerne également un bracelet de marquage destiné à identifier un ensemble de plusieurs éléments, comportant en outre plusieurs supports d'information amovibles, au moins l'un de ces supports d'information étant agencé pour pouvoir être utilisé de manière indépendante de n'importe quel autre des supports d'information. Le bracelet peut comprendre un tronc d'attache auquel est fixé au moins l'un des supports d'information de manière sécable du tronc d'attache. Selon une autre réalisation, au moins l'un des supports d'information peut comprendre un moyen d'emboîtement complémentaire d'un moyen d'emboîtement disposé sur le bracelet. De préférence, au moins l'un des supports d'information peut comprendre des moyens d'attachement à l'un des éléments de l'ensemble à identifier.

L'invention concerne également un support d'information notamment destiné à être assemblé au moins temporairement à un bracelet de marquage d'un ensemble d'éléments en vue de l'identification de l'un des éléments de l'ensemble, ledit support d'information pouvant comprendre des moyens d'attachement à l'un des éléments et un moyen d'emboîtement agencé pour pouvoir être assemblé à un moyen d'emboîtement complémentaire prévu sur le bracelet.

### Brève description des dessins

D'autres caractéristiques de la présente invention apparaîtront plus clairement à la lecture de la description qui va suivre, faite en référence aux dessins annexés, dans lesquels :
- la figure 1 est une vue d'ensemble d'un premier mode de réalisation du bracelet selon l'invention,
- la figure 2 est une vue d'ensemble d'un autre mode de réalisation du bracelet selon l'invention,
- la figure 3 est une vue détaillée d'un des supports d'information amovibles de la figure 2,
- la figure 4 est une vue détaillée de la partie complémentaire dans laquelle s'emboîte le support d'information présenté selon la figure 3,
- la figure 5 est une vue d'ensemble d'un autre mode de réalisation du bracelet selon l'invention,
- la figure 6 est une vue détaillée d'un des supports d'information amovibles de la figure 5,
- la figure 7 est une vue d'ensemble d'un autre mode de réalisation du bracelet selon l'invention, et
- la figure 8 est une vue détaillée d'un dispositif de rotation des supports d'information amovibles.

### Modes de réalisation de l'invention

Dans la description qui suit, le bracelet selon l'invention est utilisé pour identifier le gibier ou le bétail après abattage ainsi que certaines parties de l'animal après équarrissage.

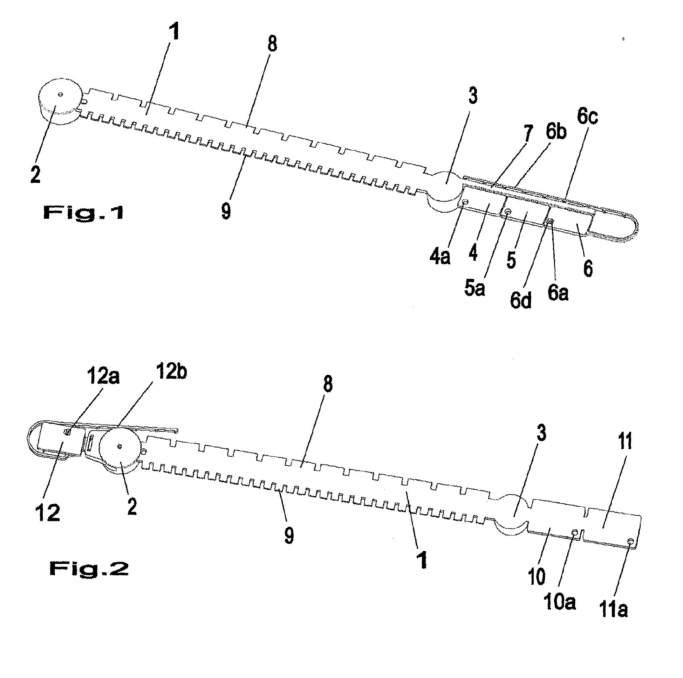

Selon un premier mode de réalisation, le bracelet selon l'invention comprend les éléments suivants, en référence à la figure 1 :
- un lien 1 en matière souple,
- un moyen de fixation 2, de type femelle, situé à l'une des extrémités du lien 1,
- un moyen de fixation 3 de type mâle, situé à l'extrémité du lien 1 opposée au moyen de fixation 2, et
- des moyens de codage de la date, constitués de douze dents éliminables des mois 8 et de trente-et-une dents éliminables des quantièmes 9.

Selon des techniques parfaitement connues de l'homme du métier, les moyens de fixation 2 et 3 sont de formes complémentaires, afin de s'emboîter l'un dans l'autre par une simple pression et sont tels que, une fois assemblés, ils ne peuvent plus être démontés. On pourra se référer, par exemple, à l'enseignement du document FR2635437.

On peut également, toujours selon des techniques parfaitement connues de l'homme du métier, utiliser des moyens de fixation 2 et 3, de formes complémentaires et s'emboîtant l'un dans l'autre d'une simple pression, mais qui seraient démontables après avoir été assemblés.

Conformément à la présente invention, il est de plus prévu, faisant saillie du bracelet, un tronc d'attache 7 solidaire du moyen de fixation 3, et portant des supports d'information 4, 5 ,6 amovibles.

Le tronc d'attache 7 des supports d'information amovibles permet de relier, au moins temporairement, les supports d'information au reste du bracelet. Pour cela, chaque support d'information 4, 5 et 6 est relié au tronc d'attache 7 par une ligne sécable permettant avantageusement de pouvoir détacher chaque support d'information indépendamment l'un de l'autre et dans un ordre quelconque, lorsque l'on en a besoin.

La figure 1 fait apparaître deux types de supports d'information. Les supports d'information 4 et 5 ont chacun un trou 4a et 5a. Après détachement du bracelet, ces supports d'information sont prévus pour être attachés à l'élément à identifier par un moyen indépendant du bracelet, par exemple, par une ficelle nouée après l'avoir passée dans le trou 4a ou 5a. Les supports d'information 4 et 5 peuvent également être recouverts, sur l'une de leur face, d'un adhésif permettant d'attacher ledit support d'information à l'élément à identifier.

Selon une autre caractéristique de l'invention, le support d'information 6 comprend un trou 6a et une attache intégrée 6b, lui permettant après détachement du bracelet, d'être fixé à l'élément à identifier sans moyens supplémentaires, en insérant ladite attache 6b dans ledit trou 6a. L'attache 6b présente des ergots 6c et le trou 6a comporte un crochet 6d permettant de maintenir un ergot dans le trou 6a de manière indémontable, selon des techniques connues de l'homme du métier.

Le bracelet présenté sur la figure 1 peut, de manière particulièrement avantageuse, être fabriqué d'une seule pièce selon des méthodes classiques d'injection de matière plastique et à un prix de revient très faible.

Au moment de l'abattage de l'animal, les informations nécessaires à la traçabilité sont reportées sur les différents supports d'informations encore reliés au reste du bracelet. Lorsqu'il est nécessaire d'identifier une partie de l'animal détachée du reste du corps, il suffit de casser la ligne sécable entre un support d'information et le tronc d'attache pour séparer ledit support. Celui-ci est ensuite relié à la partie à identifier au moyen de l'attache 6b par exemple.

Selon un autre mode de réalisation, le bracelet selon l'invention comprend les éléments suivants, en référence à la figure 2 :
- un lien 1 en matière souple,
- des moyens de fixation 2 et 3, destinés à être assemblés de manière indémontable, et
- des moyens de codage de la date, situés sur les bords longitudinaux du lien 1, constitués de douze dents éliminables des mois 8 et de trente-et-une dents éliminables des quantièmes 9.

Le lien et les moyens de fixation 2 et 3 sont réalisés de manière identique au mode de réalisation selon la figure 1.

Selon l'invention, il est prévu un premier support d'information amovible 11, relié par une ligne sécable à un second support d'information amovible 10, lui-même relié par une ligne sécable au moyen de fixation 3. Comme décrit ci-dessus, chaque support d'information comporte un trou 10a et 11a destiné, après détachement du bracelet, à attacher ledit support d'information à l'élément à identifier.

Il peut être envisagé, bien entendu, qu'un nombre différent de supports d'information du même type que le support d'information 10 ou 11 soient placés successivement au-delà du support d'information 11.

Il est également prévu un troisième support d'information amovible 12, monté par emboîtement sur le moyen de fixation 2.

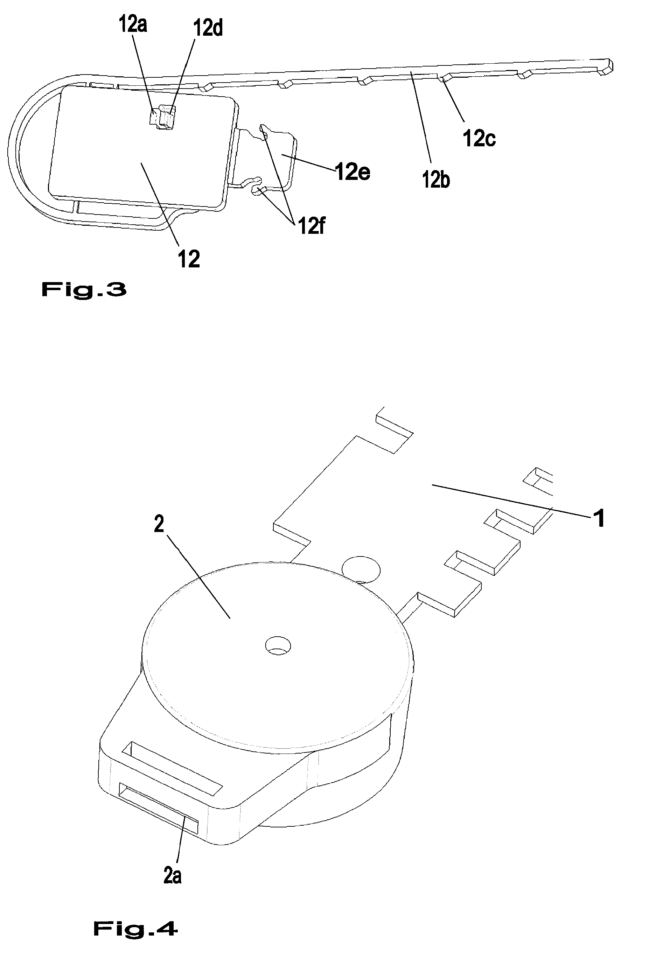

Selon cette variante, le support d'information 12 est monté sur le bracelet par clipage sur le moyen de fixation 2. Pour cela, en référence aux figures 3 et 4, le support d'information 12 comprend une partie mâle 12e comprenant deux doigts de verrouillage 12f élastiques, et le moyen de fixation 2 comprend une partie femelle 2a destinée à recevoir lesdits doigts de verrouillage 12f. La partie femelle 2a comprend des ouvertures latérales permettant d'accéder aux doigts de verrouillage 12f pour les dégager de la partie femelle 2a et libérer le support d'information 12 du moyen de fixation 2.

L'emboîtement du support d'information 12 sur le moyen de fixation 2 est réalisé, selon cette variante, par clipage. L'emboîtement pourrait également, par exemple, être réalisé par ajustement serré d'une partie mâle dans une partie femelle.

Comme décrit ci-dessus, le support d'information 12 comporte un trou 12a et une attache intégrée 12b, lui permettant après détachement du bracelet, d'être fixé à l'élément à identifier sans moyens supplémentaires, par insertion du lien 12b dans le trou 12a.

Selon cette variante, l'ensemble composé du lien 1, des moyens de fixation 2 et 3 et des supports d'information 10 et 11 peut être fabriqué d'une seule pièce selon des méthodes classiques d'injection de matière plastique. Le support d'information 12 peut également être fabriqué d'une seule pièce selon les mêmes méthodes. Ainsi, de manière particulièrement avantageuse, le bracelet selon cette variante est très modulaire, puisqu'il peut être fourni ou non avec le support d'information 12, selon les besoins. Il est également possible de fournir le support d'information 12 seul, indépendamment du reste du bracelet.

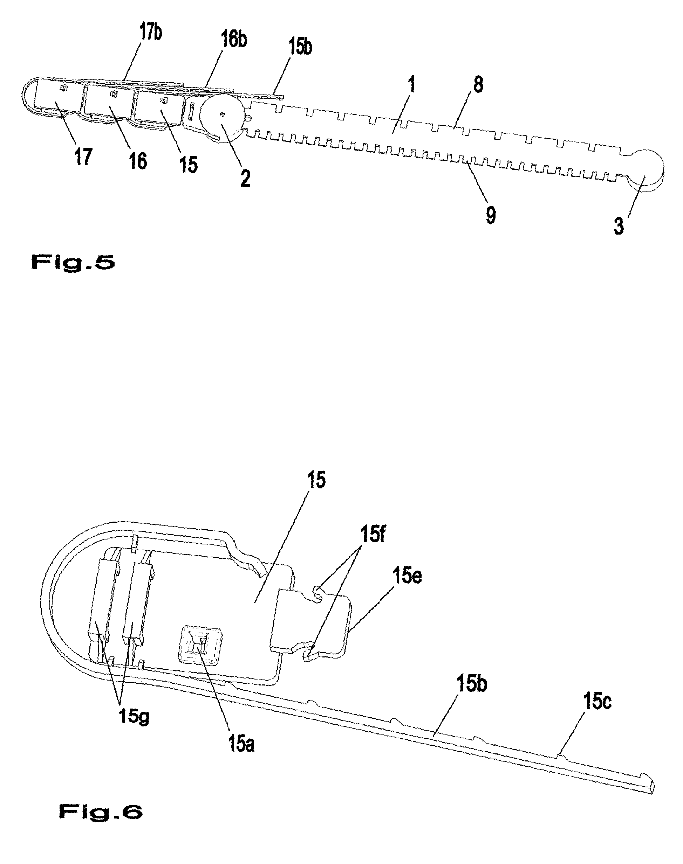

Selon un autre mode de réalisation, le bracelet selon l'invention comprend les éléments suivants, en référence à la figure 5 :
- un lien 1 en matière souple,
- des moyens de fixation 2 et 3, destinés à être assemblés de manière indémontable, et
- des moyens de codage de la date, situés sur les bords longitudinaux du lien 1, constitués de douze dents éliminables des mois 8 et de trente-et-une dents éliminables des quantièmes 9.

Le lien et les moyens de fixation 2 et 3 sont réalisés de manière identique au mode de réalisation selon la figure 1.

Conformément à l'invention, il est prévu un support d'information amovible 17, monté par clipage sur un support d'information amovible 16, lui-même monté par clipage sur un support d'information amovible 15, lui-même monté par clipage sur le moyen de fixation 2,

En référence aux figures 6 et 4, chaque support d'information comprend une partie mâle 15e et une partie femelle 15g. La partie mâle 15e est destinée à s'assembler par clipage avec une partie femelle 15g d'un autre support d'information ou encore avec la partie femelle 2a du moyen de fixation 2, au moyen de deux doigts de verrouillage 15f élastiques. La partie femelle 15g est constituée de deux ponts destinés d'une part à guider la partie mâle 15e et d'autre part à recevoir les doigts de verrouillage 15f, selon le même principe que ci-dessus.

Comme décrit ci-dessus, le support d'information 15 comporte un trou 15a et une attache intégrée 15b, lui permettant après détachement du bracelet, d'être fixé à l'élément à identifier sans moyens supplémentaires, par insertion du lien 15b dans le trou 15a.

Selon ce mode de réalisation, l'ensemble composé du lien 1 et des moyens de fixation 2 et 3 peut être fabriqué d'une seule pièce selon des méthodes classiques d'injection de matière plastique. Chaque support d'information 15, 16 ou 17 peut également être fabriqué d'une seule pièce selon les mêmes méthodes. Ainsi, de manière particulièrement avantageuse, le bracelet selon cette variante est très modulaire, puisqu'il peut être fourni ou non avec un ou plusieurs supports d'information 15, 16 ou 17, selon les besoins. Il est également possible de fournir le support d'information 15, 16 ou 17 seul, indépendamment du reste du bracelet. Selon ce mode de réalisation, il est possible d'utiliser les supports d'information indépendamment les uns des autres et dans un ordre quelconque, en détachant directement celui à utiliser s'il est placé à l'extrémité du bracelet, ou en détachant plusieurs supports d'information jusqu'à celui à utiliser et en replaçant celui ou ceux qu'on n'utilise pas.

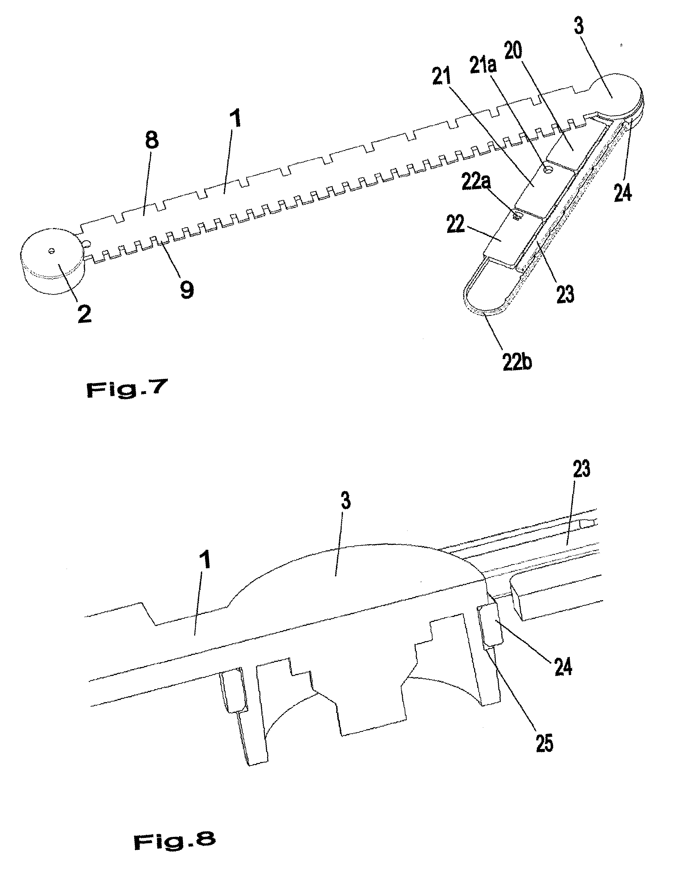

Selon un autre mode de réalisation, le bracelet selon l'invention comprend les éléments suivants, en référence aux figures 7 et 8 :
- un lien 1 en matière souple,
- des moyens de fixation 2 et 3, destinés à être assemblés de manière indémontable, et
- des moyens de codage de la date, situés sur les bords longitudinaux du lien 1, constitués de douze dents éliminables des mois 8 et de trente-et-une dents éliminables des quantièmes 9.

Le lien 1 et les moyens de fixation 2 et 3 sont réalisés de manière identique au mode de réalisation selon la figure 1.

Conformément à l'invention, il est de plus prévu, faisant saillie du bracelet, un tronc d'attache 23 portant des supports d'information 20, 21, 22 amovibles, et solidaire d'un anneau 24 en matière souple, lui-même monté dans une gorge 25 pratiquée sur la périphérie du moyen de fixation 3.

La section extérieure du moyen de fixation 3, au niveau de la gorge 25, est circulaire. L'anneau 24 est assemblé au moyen de fixation 3 en le faisant rentrer de force dans la gorge 25 et de manière à ce qu'une fois monté, l'anneau 24 puisse pivoter autour du moyen de fixation 3 tout en restant maintenu à celui-ci. Ainsi, l'ensemble tronc d'attache 23 et supports d'information 20, 21 et 22, grâce à l'anneau 24, peut se superposer au lien 1.

Une fois l'ensemble composé du tronc 23 et des supports d'information 20, 21 et 22 superposé au lien 1, la longueur totale du bracelet se trouve réduite de manière particulièrement avantageuse. De plus, les supports d'information se trouvent protégés afin d'éviter tout détachement de ceux-ci par inadvertance. L'ensemble composé du lien 1 et des moyens de fixation 2 et 3 peut être fabriqué d'une seule pièce selon des méthodes classiques d'injection de matière plastique. L'ensemble composé du tronc 23, des supports d'information 20, 21 et 22 et de l'anneau 24 peut également être fabriqué d'une seule pièce selon les mêmes méthodes. Ainsi, de manière particulièrement avantageuse, le bracelet selon cette variante est très modulaire, puisqu'il peut être fourni ou non avec des supports d'information, selon les besoins.

Comme décrit ci-dessus, chaque support d'information 20 et 21 a un trou 21a et 22a lui permettant, après détachement du bracelet, d'être fixé à l'élément à identifier par un moyen indépendant du bracelet. Le support d'information 22 comporte une attache intégrée 22b, lui permettant après détachement du bracelet, d'être fixé à l'élément à identifier sans moyens supplémentaires, par insertion du lien 22b dans le trou 22a.

L'invention divulguée dans ce document, selon l'un ou l'autre des modes de réalisation, propose des moyens permettant de répondre aux impératifs de traçabilité du gibier ou du bétail après son abattage. Le lien indémontable permet d'attribuer un numéro d'identifiant à l'animal et éventuellement d'indiquer sa date d'abattage. Les supports d'information amovibles permettent d'identifier certaines parties de l'animal, au moyen du même identifiant qui aurait été apposé également sur le lien du bracelet et sur un ou plusieurs autres supports d'information amovibles.

Il sera bien entendu très facile pour l'homme du métier, de combiner tout ou partie des caractéristiques de plusieurs des modes de réalisation sans sortir du cadre de la présente invention. De même, le support d'information pourra être solidaire de toute autre partie du bracelet, notamment d'un des bords longitudinaux de celui-ci.

Par ailleurs, la présente invention est évoquée pour l'identification du gibier ou du bétail. Celle-ci peut également, toujours sans sortir de son cadre, être utilisée pour l'identification de plusieurs éléments d'un même ensemble parmi lesquelles on peut citer, de manière non limitative :
- un ensemble de bagages appartenant à une même personne lors d'un voyage,
- un ensemble d'objets réunis au sein d'une même commande auprès d'un fournisseur,
- un ensemble d'objets ne pouvant pas être vendus séparément dans un magasin,
- les éléments d'un ordinateur fixe devant être identifiés parmi un parc d'ordinateurs...

## Revendications

1. Bracelet de marquage destiné à identifier un ensemble de plusieurs éléments, ledit bracelet comprenant un lien (1) dont les extrémités sont munies de moyens de fixation complémentaires (2, 3), **caractérisé en ce que** ledit bracelet comporte en outre au moins un support d'information (4, 5, 6, 10, 11, 12, 15, 16, 17, 20, 21, 22) amovible et agencé pour être attaché, après séparation d'avec le bracelet, à l'un des éléments de l'ensemble à identifier.

2. Bracelet de marquage selon la revendication 1, **caractérisé en ce qu'**il comprend un tronc d'attache (7, 23) auquel est fixé le support d'information (4, 5, 6, 20, 21, 22) de manière sécable dudit tronc d'attache (7, 23).

3. Bracelet de marquage selon la revendication 1, **caractérisé en ce que** ledit support d'information (12, 15, 16, 17) et le bracelet comprennent des moyens d'emboîtement complémentaires (12e, 15e, 2a).

4. Bracelet de marquage selon la revendication 3, **caractérisé en ce que** ledit support d'information (15, 16, 17) comprend également un moyen d'emboîtement (15e) complémentaire d'un moyen d'emboîtement (15g) d'un autre support d'information (15, 16, 17).

5. Bracelet de marquage selon l'une des revendications 1 à 4, **caractérisé en ce que** ledit support d'information (20, 21, 22) est monté pivotant par rapport à l'une des extrémités du bracelet, de manière à pouvoir se superposer au lien (1).

6. Bracelet de marquage selon l'une des revendications 1 à 5, **caractérisé en ce que** ledit support d'information (6, 12, 15, 16, 17, 22) comprend des moyens d'attachement (6b, 12b, 15b, 16b, 17b, 22b) à l'un des éléments de l'ensemble à identifier.

7. Bracelet de marquage selon l'une des revendications 1 à 6, **caractérisé en ce que** au moins l'un des bords longitudinaux du lien (1) comporte des dents éliminables (8, 9) destinées à définir un quantième, un mois ou une année.

8. Bracelet de marquage destiné à identifier un ensemble de plusieurs éléments, ledit bracelet comprenant un lien (1) dont les extrémités sont munies de moyens de fixation complémentaires (2,3), **caractérisé en ce que** le bracelet comporte en outre au moins un support d'information amovible (6, 12, 15, 16, 17, 22), ledit support d'information comprenant des moyens d'attachement (6b, 12b, 15b, 16b 17b, 22b) à l'un des éléments de l'ensemble à identifier.

9. Bracelet de marquage destiné à identifier un ensemble de plusieurs éléments, ledit bracelet comprenant un lien (1) dont les extrémités sont munies de moyens de fixation complémentaires (2, 3), **caractérisé en ce que** le bracelet comporte en outre plusieurs supports d'information amovibles (4, 5, 6, 12, 15, 16, 17, 20, 21, 22), au moins l'un desdits supports d'information étant agencé pour pouvoir être utilisé de manière indépendante de n'importe quel autre desdits supports d'information.

10. Bracelet de marquage selon la revendication 9, **caractérisé en ce qu'**il comprend un tronc d'attache (7, 23) auquel est fixé au moins l'un desdits supports d'information de manière sécable du tronc d'attache (7, 23).

11. Bracelet de marquage selon la revendication 9, **caractérisé en ce qu'**au moins l'un desdits supports d'information (12, 15, 16, 17) comprend un moyen d'emboîtement complémentaire (12e, 15e) d'un moyen d'emboîtement (2a) disposé sur le bracelet.

12. Bracelet de marquage selon l'une des revendications 9 à 11, **caractérisé en ce qu'**au moins l'un desdits supports d'information (12, 15, 16, 17) comprend des moyens d'attachement (12b, 15b, 16b, 17b) à l'un des éléments de l'ensemble à identifier.

13. Support d'information (12, 15, 16, 17) notamment destiné à être assemblé au moins temporairement à un bracelet de marquage d'un ensemble d'éléments selon l'une des revendication 3 et 11, en vue de l'identification de l'un des éléments de l'ensemble, **caractérisé en ce qu'**il comprend des moyens d'attachement (12b, 15b, 16b, 17b) à l'un desdits éléments et un moyen d'emboîtement (12e, 15e) agencé pour pouvoir être assemblé à un moyen d'emboîtement complémentaire (2a) prévu sur ledit bracelet.
